(19)

Europäisches Patentamt / European Patent Office / Office européen des brevets

(11) **EP 4 624 872 A1**

(12) **EUROPEAN PATENT APPLICATION**

(43) Date of publication:
  **01.10.2025 Bulletin 2025/40**

(21) Application number: **24166092.7**

(22) Date of filing: **25.03.2024**

(51) International Patent Classification (IPC):
  **G01D 5/244** (2006.01)   **G01D 5/245** (2006.01)
  **G01D 18/00** (2006.01)

(52) Cooperative Patent Classification (CPC):
  **G01D 5/2454; G01D 5/2449; G01D 18/001**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **GE KH MA MD TN**

(71) Applicant: **Vishay S.A.**
  **06003 Nice Cedex 1 (FR)**

(72) Inventor: **KARCIAUSKAS, Pierre**
  **53200 Château-Gontier (FR)**

(74) Representative: **Cabinet Netter**
  **36, avenue Hoche
  75008 Paris (FR)**

(54) **HIGH-RESOLUTION ANGULAR POSITION SENSOR SYSTEM AND METHODS**

(57)   An angular position sensor system (10) and methods provide an angular position measurement between a reference radius (R) and a position radius (P) that originate at a center (C) of a circle. An incremental sensor (12) includes poles disposed along a predetermined arc of the circle that provides an incremental measurement V(in) of a pole through which the position radius passes. An absolute sensor (14) provides an absolute measurement of the position radius from which the number of poles (NP) between the reference radius and the measured pole is determined. An adjusted absolute angular measurement is determined from the absolute measurement of the position radius offset by a quantity reflective of a distance of the position radius from a midpoint of the measured pole. NP is determined based on a correspondence of the adjusted absolute angular measurement with a pole table to avoid pole shifting distortions errors during use. The angular position measurement is then determined based on NP and the incremental measurement.

FIG. 1

EP 4 624 872 A1

**Description**

**BACKGROUND**

Measuring devices making it possible to measure an angular position of a reference point, movable angularly around an axis, relative to a fixed point of origin are known in the art. Such devices may include a support disk, carrying the reference point, rotating around the axis, and an angular sensor, cooperating with at least one magnetic element secured to the support disk, to measure an angular position of the reference point relative to at the reference point. origin. Such an angular sensor can for example consist of a "360° Hall effect" type sensor, or a "sine/cosine Hall effect" type sensor, or even by a potentiometric track. Such a measuring device is however limited, so that it may be considered insufficient for certain applications.

High-precision measuring devices have been devised with a multipole incremental magnetic position sensor couple with a relatively low-precision sensor for more accurate measurement of an angular position. An example of such a device that uses a multiple di-pole magnetic sensors is described in PCT Publication No. WO 2014/048872. In such a magnetic measuring device with a multipole position sensor system, it becomes necessary to determine where a pole that provides an incremental position value is accurately located using an absolute value provided by an absolute sensor. The calculation of incremental values must be tolerant to the faults of the signals received. In some situations, bad mechanical positioning, temperature drift, and/or parasitic noise may disturb, at least to some extent, the calculation which would indicate an incorrect pole and therefore create a significant error on the final value (an error known as "pole jump").

PCT Publication No. WO 2014/048872 provides a relatively complex solution to this problem. Thus, there is a need for a simplified solution for addressing the problem of pole jump.

SUMMARY

An angular position sensor system and methods provide an angular position measurement between a reference radius and a position radius that originate at a center of a circle.

In one example, the angular position sensor system includes a multipole incremental sensor, an absolute sensor, a memory and a processor. The incremental sensor includes a series of adjacent poles disposed along a predetermined arc of the circle having a first pole with a first end intersecting the reference radius. Measurements are made with respect to a pole through which the position radius passes. The incremental sensor is configured to provide an incremental measurement from a first end of the measured pole to the position radius. The absolute sensor is configured to provide an absolute sensor measurement with respect to the position radius from which the number of poles between the reference radius and the measured pole is determined. The memory is configured with a pole table including calibration data of a sequence of absolute sensor measurements reflective of adjacent pole transitions. The processor is configured to determine the number of poles between the reference radius and the measured pole based on a correspondence of an adjusted absolute angular measurement with the pole table where the adjusted absolute angular measurement is determined from the absolute sensor measurement of the position radius offset by a quantity reflective of a distance of the position radius from a midpoint of the measured pole. The processor is further configured to determine the angular measurement between the reference radius and the position radius based on a width of the determined the number of poles between the reference radius and the measured pole plus a width reflective of the incremental measurement.

The angular position sensor system can include an incremental sensor having a series of np adjacent poles disposed around the entire circle, each pole having an arcuate width of approximately $360/np°$. The incremental sensor can also be configured to provide an incremental digital measurement $V(in)$ as the incremental measurement of the measured pole where $V(in)$ is in the range of N values (0 to N-1). The absolute sensor can be configured to provide a digital absolute angular measurement $V(a)$ of the position radius as the absolute sensor measurement with respect to the reference radius. The pole table can be reflective of a step function having the sequence of absolute sensor measurements defining each step. The processor can be configured to determine the number of poles NP between the reference radius and the measured pole based on the correspondence of the adjusted absolute angular measurement defined as $V'(a)$ with the pole table where: $V'(a) = V(a) + \delta$ where $\delta = (N/2 - V(in))/np$. The processor can be further configured to determine the angular measurement between the reference radius and the position radius of the circle as $A_{final}$ where: $A_{final} = (NP*N + V(in)) / np$.

For ease of calculation, the series of np adjacent poles can be designated with sequential pole numbers (PNs) 0 to np-1 disposed around the entire circle, with the pole number PN of first pole designated as 0. The pole table can then define a respective pole number PN for each step corresponding to the sequence of absolute sensor measurements defining each step. The processor can then be configured to determine, as the number of poles NP between the reference radius and the measured pole, the pole number PN of a pole indicated by the pole table as corresponding to the adjusted absolute angular measurement $V'(a)$ and to determine the angular measurement between the reference radius and the position radius of the circle as $A_{final}$ where: $A_{final} = (PN*N + V(in)) / np$.

The example incremental sensor can include a series of 64 adjacent poles, each pole having an arcuate width of approximately 360/64° and be configured to provide a 12 bit incremental digital measurement V(in) with N=4096. The example absolute sensor can also be configured to provide a 12 bit digital absolute angular measurement V(a).

The angular position sensor system may be configured with an incremental sensor having poles of non-uniform width. In such case, the incremental sensor may include a series of i (i $\leq$ np) adjacent poles of non-uniform width, the poles having an arcuate width of approximately 360/np°. The incremental sensor can be configured to provide an incremental digital measurement V(in) as the incremental measurement of the measured pole where V(in) is in the range of N values (0 to N-1). The absolute sensor can be configured to provide a digital absolute angular measurement V(a) of the position radius as the absolute sensor measurement with respect to the reference radius. The memory is then configured with a point to point correction table including correction values reflective of non-linearities attributable to non-uniform pole widths. The pole table can be reflective of a step function having the sequence of absolute sensor measurements defining each step. The processor can then be configured to determine the number of poles NP between the reference radius and the measured pole based on the correspondence of the adjusted absolute angular measurement defined as V'(a) with the pole table where: V'(a) = V(a)+ $\delta$ where $\delta$=(N/2-V(in))/np and to determine the angular measurement between the reference radius and the position radius of the circle as A'$_{filal}$ where: A'$_{final}$ =[(NP*N+V(in)) / np]+CV where CV is a correction value from the point to point correction table corresponding to (NP*N+V(in)) / np.

The angular position sensor system may be configured as an arc sensor. In such case, the incremental sensor includes a series of i (i <np) adjacent poles, each pole having an arcuate width of approximately 360/np°. Accordingly, the angular position sensor system is thusly configured to provide an angular measurement between the reference radius and the position radius of an arc less than 360°.

The angular position sensor system can include an incremental sensor that is an incremental magnetic position sensor or a inductive position sensor. The angular position sensor system can include an incremental sensor that is configured to provide angular measurements. Alternatively, the angular position sensor system can include an incremental sensor and an absolute sensor that are configured to provide linear measurements.

A mechanical device having a first member rotatably connected with a second member about an axis can include the angular position sensor system in any of its forms. In such case, the angular position sensor system is mounted with respect to the first and second members such that the axis is orthogonal to the center of the circle, the reference radius is fixed with respect to the first member, and the position radius is fixed with respect to the second member. Accordingly the angular position sensor system is thusly configured to provide an angular measurement between the reference radius and the position radius reflective of a rotational displacement of the first member with respect to the second member.

A method of angular measurement between a reference radius and a position radius that originate at a center of a circle uses an incremental sensor including a series of adjacent poles disposed along a predetermined arc of the circle having a first pole and a last pole with a first end of the first pole intersecting the reference radius.

An example method includes generating an incremental measurement with respect to a pole of the incremental sensor through which the position radius passes from a first end of that measured pole to the position radius and generating an absolute measurement of the position radius from which the number of poles between the reference radius and the measured pole is determined. A number of poles NP is determined between the reference radius and the measured pole based on a correspondence of an adjusted absolute angular measurement with a pole table. The pole table includes calibration data of a sequence of absolute measurements reflective of adjacent pole transitions. The adjusted absolute angular measurement is determined from the absolute measurement of the position radius offset by a quantity reflective of a distance of the position radius from a midpoint of the measured pole. The angular measurement between the reference radius and the position radius is then determined based on a width of the determined the number of poles NP between the reference radius and the measured pole plus a width reflective of the incremental measurement.

In the example method, the incremental sensor may include a series of np adjacent poles disposed around the entire circle, each pole having an arcuate width of approximately 360/np°. In such case, an incremental digital measurement V(in) can be generated as the incremental measurement of the measured pole where V(in) is in the range of N values (0 to N-1). A digital absolute angular measurement V(a) of the position radius can be generated as the absolute measurement with respect to the reference radius. The pole table can be reflective of a step function having the sequence of absolute measurements defining each step. The number of poles NP between the reference radius and the measured pole can then be determined based on the correspondence of the adjusted absolute angular measurement defined as V'(a) with the pole table where: V'(a) = V(a)+ $\delta$ where $\delta$=(N/2-V(in))/np. The angular measurement between the reference radius and the position radius of the circle can then be determined as A$_{final}$ where: A$_{final}$ =(NP*N+V(in)) / np.

The example method can be performed where the series of np adjacent poles are designated with sequential pole numbers (PNs) 0 to np-1 disposed around the entire circle, with the pole number PN of first pole designated as 0, and where the pole table defines a respective pole number PN for each step corresponding to the sequence of absolute measurements defining each step. In such case, the number of poles NP between the reference radius and the measured pole can be determined as the pole number PN of a pole indicated by the pole table as corresponding to the adjusted absolute angular measurement V'(a). The angular measurement between the reference radius and the position radius of the circle can then be is determined as $A_{final}$ where:

$$A_{final} = (PN*N+V(in)) / np.$$

The example method may be performed where the incremental sensor includes a series of 64 adjacent poles, each pole having an arcuate width of approximately 360/64°, a 12 bit incremental digital measurement is generated as V(in) with N=4096, and a 12 bit digital absolute angular measurement is generated as V(a).

A method of angular measurement can be performed with an incremental sensor having poles of non-uniform width. In such case, the incremental sensor may include a series of i (i $\leq$np) adjacent poles of non-uniform width, the poles having an average arcuate width of approximately 360/np°, and the pole table can reflect a step function having the sequence of absolute measurements defining each step. In such an example, an incremental digital measurement V(in) can be generated as the incremental measurement of the measured pole where V(in) is in the range of N values (0 to N-1) and a digital absolute angular measurement V(a) of the position radius can be generated as the absolute measurement with respect to the reference radius. The number of poles NP between the reference radius and the measured pole is then determined based on the correspondence of the adjusted absolute angular measurement defined as V'(a) with the pole table where: V'(a) = V(a)+ $\delta$ where $\delta$=(N/2-V(in))/np. The angular measurement between the reference radius and the position radius of the circle is determined as $A'_{final}$ where: $A'_{final}$ =[(NP*N+V(in)) / np]+CV where CV is a correction value from a point to point correction table that includes correction values reflective of non-linearities attributable to non-uniform pole widths.

A further example is performing the methods of angular measurement using with an arc sensor where the incremental sensor includes a series of i (i <np) adjacent poles, each pole having an arcuate width of approximately 360/np°. In such case, the angular measurement between the reference radius and the position radius is of an arc less than 360°.

The example methods can be performed where the incremental sensor is an incremental magnetic position sensor or a inductive position sensor, so that a respective magnetic or inductive measurement is generated as the incremental measurement. The example methods can be performed where the incremental sensor is configured to provide angular measurements, so that an angular measurement is generated as the incremental measurement. The example methods can be perform where the incremental sensor is configured to provide linear measurements, so that linear measurements are generated as the incremental and the absolute measurements.

A method of determining a rotational displacement with respect to a mechanical device having a first member rotatably connected with a second member about an axis is also provided. For example, any of the above example methods of angular measurement are performed such that the mechanical device's axis is orthogonal to the center of the circle, the reference radius is fixed with respect to the first member, and the position radius is fixed with respect to the second member. The angular measurement between the reference radius and the position radius thusly determined is reflective of the rotational displacement of the first member with respect to the second member.

Other objects and advantages will be apparent to those of ordinary skill in the art from the following detailed description and accompanying drawings.

**BRIEF DESCRIPTION OF THE DRAWINGS**

A more detailed understanding may be had from the following description, given by way of example in conjunction with the accompanying drawings, wherein like reference numerals in the figures indicate like elements, and wherein:

FIG. 1 is diagram illustrating a high resolution angular position sensor system according to an embodiment.

FIGs. 2A and 2B are graphs illustrating examples of absolute sensor signals over a range of angles from 0° to 360° and from 0° to 60°, respectively, in comparison with corresponding incremental sensor signals.

FIG. 3A is a graph of illustrating incremental sensor signals for a case where pole width is non-uniform.

FIG. 3B is a further expanded graph of FIGs. 2A and 2B, illustrating pole table data points.

FIG. 4 is a flowchart showing the application of a pole table to input value to generate pole numbers.

FIG. 5 is a graph illustrating the pole numbers as a function of values.

FIG. 6 is a graph illustrating the curves with respect to incremental signal values of example poles n-1, n, and n+1, and the corresponding absolute signal values and pole table values without any distortion.

FIG. 7 is a graph showing pole table, absolute value and incremental value curves with the effect of pole shifting that may occur during usage of the angular position sensor system.

FIG. 8 is a graph showing pole table, absolute value and incremental value curves, and a central position on the incremental value curve with respect to the example of Fig. 7.

FIG. 9 is a graph showing the offsetting between the values on the incremental value curve and on the absolute value curve with respect to the pole shift example of Fig. 7.

FIG. 10 is a flowchart illustrating an embodiment of a process for deriving the final angle $A_{final}$ by using a modified absolute value V'(a).

**DETAILED** DESCRIPTION

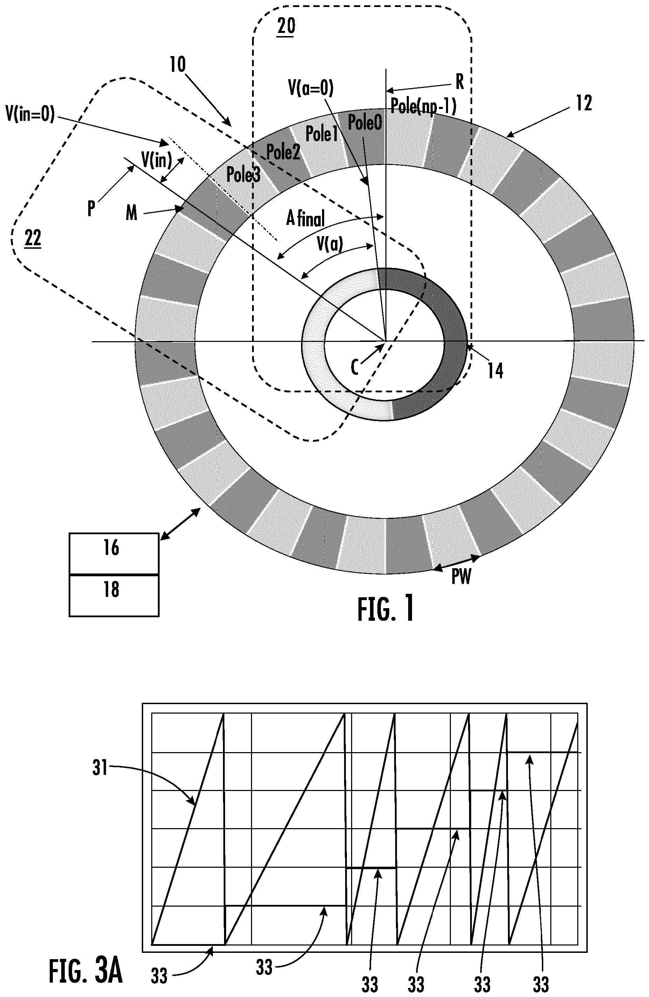

FIG. 1 shows an example of a high resolution angular position sensor system 10 configured to provide a high resolution angular position measurement between a reference radius R and a position radius P that originate at a center C of a circle.

The exemplative angular position sensor system 10 includes a multipole incremental sensor system 12 configured to provide an incremental measurement V(in) with respect a measured pole M intersected by the position radius P. In the illustrated example of Fig. 1, a specific pole is identified as the measured pole M with respect to the illustrated position of the position radius P. However, any of the poles may become the measured pole M dependent on the position of the position radius P.

The incremental measurement V(in) is combined with a width of poles between the measured pole M and the reference radius R to determine the high resolution angular position measurement indicated as $A_{final}$ in the Fig.1. As illustrated, the example angle $A_{final}$ equals the angular width of incremental measurement V(in) plus the angular width of the four poles, Pole0 through Pole3.

Where the poles have a uniform width, the number of poles (NP) between the measured pole M and the reference radius R can determined in order to calculate the high resolution angular position measurement. Also, the incremental measurement V(in) is adjusted by dividing by the number of poles np that define the circle so the angular position measurement $A_{final}$ can then be viewed as: $A_{fina}= (NP*PW)+(V(in)/np)$.

As explained in PCT Publication No. WO 2014/048872, in practice, the poles may not all have the same width so that, in such case, a point to point correction table is made during a calibration phase that defines a corresponding correction value for each potential value of the final angle. The angular position measurement $A_{final}$ is adjusted according to the point to point correction table. As the case discussed below with respect to Fig. 3A.

The exemplative angular position sensor system 10 further includes an absolute sensor 14 configured to provide an absolute angular measurement V(a) from which the number of poles between the measured pole M and the reference radius R is determined. In the example of Fig. 1, the absolute angular measurement V(a) is of an angle from a radius identified as V(a=0) to the position radius P. If the position radius is the same as the V(a=0) radius, the absolute angular measurement V(a) equals 0. For computational convenience, the V(a=0) radius of the absolute sensor 14 extends through a pole of the multipole incremental sensor system 12, which pole is then identified as a first pole of the incremental sensor 12.

Both the incremental sensor 12 and the absolute sensor 14 can be configured to provide digital measurement. For example, the incremental sensor 12 can be configured to provide an incremental digital measurement as V(in) where V(in) is in the range of N values 0 to N-1, N corresponding, in this case, to the angle made by a pole.

In the example illustrated in Figure 1, the incremental sensor 12 comprises a series of a certain number (np) of adjacent poles, namely a first pole Pole0 passing through a last Pole (np-1). The poles have a predetermined arcuate width PW arranged along a predetermined circular arc. In the example shown in Figure 1, the poles are arranged around the entire circle and, as such, the angular position sensor system 10 can operate as a fully rotating sensor. Accordingly, the arcuate width PW of each pole is equal to 360/np, within a desired tolerance, in the example of Figure 1. In another embodiment, the incremental sensor system 12 may include a series of i adjacent poles, where i is less than np, each pole having an arcuate width of 360/np°. As such, the angular position sensor system 10 becomes an arc sensor configured to provide an angular position measurement between the reference radius and the position radius of an arc less than 360°.

Each pole has a first end and a second end, such that the first end of each next pole is adjacent the second end of a prior adjacent pole in the series. In the example illustrated by Fig. 1, the last pole pole(np-1) has a next pole, namely pole0. However, in a case where the series of poles extend over a limited arc of the circle, the last pole will not have a next pole in the series.

With respect to the measured pole M, i.e. the pole through which the position radius P passes, the incremental sensor system 12 is configured to provide the incremental measurement V(in) from the position radius P to a radius intersecting with the first end of the measured pole M indicated as V(in=0). If the position radius is the same as the V(in=0) radius, the incremental measurement V(in) equals 0.

The system 10 can be used with linear measurement, so angle measurement can be replace by length measurement. The system can use incremental and absolute position sensors such as, for example, those disclosed in PCT Publication No. WO 2014/048872. Other types of sensors may be used such as, for example, magnetic sensors, inductive sensor or capacitive sensor that make linear measurement or angle measurement.

The example system 10 includes a memory 16 and a processor 18. These components can be incorporated in a computer that, for example, may include a microcontroller, a processor, a programmable logic circuit such as FGPA (Field-Programmable Gate Array), EPLD (Erasable Programmable Logic Deviceand/or any other type of computing device.

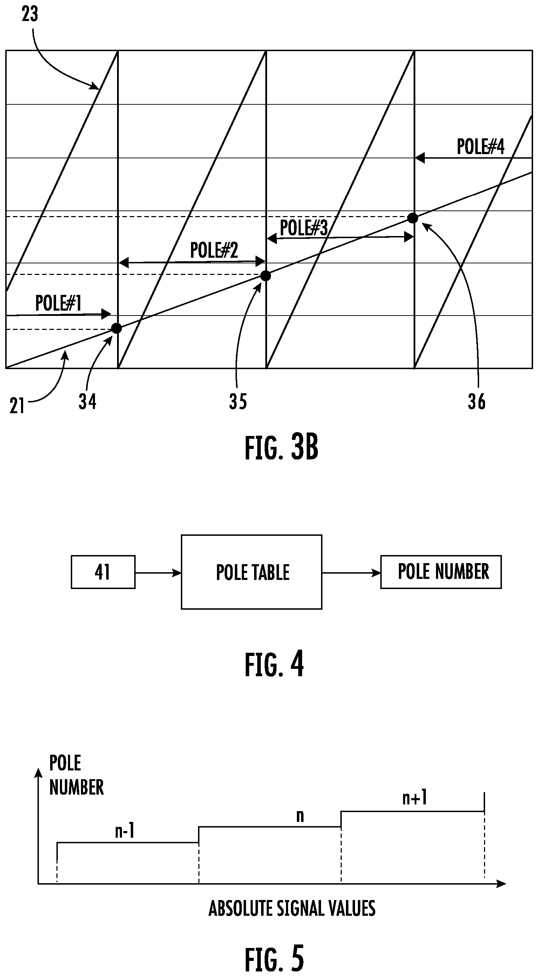

The memory is configured with a pole table that includes calibration data of a sequence of absolute sensor measurements of successive radii that correspond to transition points between adjacent poles. The pole table is configured to provide a correspondence of each absolute sensor measurement V(a) with a specific pole of the incremental sensor system 12. As such, the pole table is reflective of a step function having the sequence of absolute sensor measurements defining values of each step that corresponds to a specific pole. See Figs. 3B and 5. Where pole width in not uniform, the memory may also include the point to point correction table.

The processor is configured to use to determine the number of poles NP between the reference radius R and the measured pole M and to then determine the absolute angular position measurement between the reference radius R and the position radius P using the determined number of poles NP and the incremental value V(in).

The angular position sensor system 10 can be incorporated into a mechanical device (shown in phantom) having a first member 20 rotatably connected with a second member 22 about an axis. In such case, the angular position sensor system is mounted with respect to the first and second members 20, 22, such that the axis is orthogonal to the center C of the circle, the reference radius R is fixed with respect to the first member 20 and the position radius P is fixed with respect to the second member 22. With such a configuration, the angular position sensor system is configured to provide the high resolution angular position measurement between the reference radius R and the position radius P reflective of a rotational displacement of the first member 20 with respect to the second member 22.

In order to avoid error that can be caused by pole shifting distortions during usage of the angular position sensor system 10, the processor 18 is configured to determine the number of poles NP based on a value from the pole table corresponding to an adjusted absolute angular measurement. As explained graphically below, the processor is configured to calculate the adjusted absolute angular measurement as equal to the absolute sensor measurement of the position radius P offset by a quantity reflective of a distance of the position radius P from a midpoint of the measured pole M.

The following is an example of an embodiment illustrated in Fig. 1 providing further explanatory details. In the example, the incremental sensor 12 include a series of 64 adjacent poles (np=64). Preferentially, the incremental sensor 12 has a number of poles np equal to an integer power of 2 (16,32,64,128, etc...) to facilitate the binary calculation of the division of V(in) by np.

Each pole is designated with a corresponding pole number PN ranging respectively from PN=0 for the first pole and PN=63 for the last pole of the series. The example incremental sensor is configured to provide a 12 bit incremental digital measurement for V(in) so that the number of pole measurement increments N equals 4096 and V(in) values range from 0-4095. The absolute sensor can also be configured to provide a 12 bit digital absolute angular measurement for V(a) values.

Each pole has an arcuate width PW of approximately 5.6° (~360/64°) and the value of half a pole is 2.8° (5.6°/2). As explained below, if, during use, the absolute angle drifts, for example, in temperature by 2°, there will be no error in the pole determination caused by the pole jump (2° < 5.6°/2=2.8°) using the adjusted absolute angular measurement that would introduce error in the determination of the desired angle $A_{final}$ with angular position sensor system 10. With only the use of the absolute angular measurement, errors would occur.

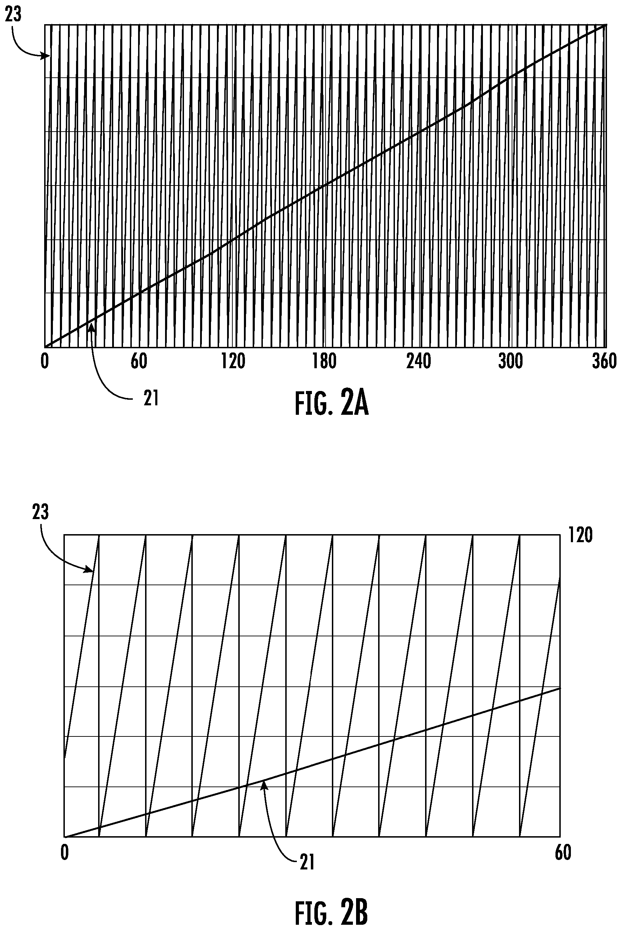

Figs. 2A and 2B are graphs showing absolute signal values 21 with corresponding incremental signal values 23 of successive poles as the position radius is rotated from V(a=0) for creation of the pole table. Fig. 2A is a graph showing the corresponding absolute and incremental values 21, 23 over an entire range of 0° to 360° of absolute signals values V(a) with respect to the position radius P, i. e. V(a=0) to V(a=4095). Fig. 2B is a more detailed, expanded graph showing absolute and incremental signal values 21, 23 over a range of 0° to 60° of V(a) values.

The sawtooth curves 23 in Figs. 2A and 2B illustrate typical incremental signals over the measured range of angles, with each successive "tooth" representing the values V(in) for a successive pole. There are 64 teeth representing the series of 64 poles in the example in Fig. 2A. The nearly linear curves 21 in Figs. 2A and 2B illustrate typical absolute signals V(a) over the measured range. However, during use, the absolute signal is often distorted due to non-linearities.

In Figs. 2A and B, the "teeth" of the incremental value curves 23 are uniformly space reflecting a uniform width of the poles in the example. Fig. 3A illustrates a curve 31 of incremental values for the first six poles of the incremental sensor made during a calibration of the angular position sensor system reflecting the case where the pole widths are non-uniform. The non-uniform pole widths 33 of all the poles create non-linearities in the angular measurement from the reference radius R. Accordingly, the point to point correction table reflective of calibration data defines a correction value that correspond to each potential value of the final angle $A_{final}$ calculated from a high precision reference sensor during a calibration sequence.

The creation of the pole table is illustrated in Fig. 3B. The pole table corresponds to the values of the absolute signal V(a) during a pole transition of incremental values from one pole to the next adjacent pole. Fig. 3A is a further expanded graph of Fig. 2B, illustrating three points of transition 34, 35, 36 of the absolute signals values V(a) with respective transitions of Pole#1 to Pole#2, Pole#1 to Pole#3 and Pole#1 to Pole#4, respectively. In this example, Pole#1 corresponds to pole0 having PN=0, Pole#2 corresponds to pole1 having PN=1, Pole#3 corresponds to pole2 having PN=2, and Pole#4 corresponds to pole3 having PN=3.

Over the entire range of absolute signal values V(a) in this example with 64 poles, there are a series of 64 absolute signals values corresponding with respective transitions of incremental values. The pole table is then created, for example, by assigning each value of absolute signal V(0)-V(4095) a corresponding pole number. For example, values V(t1), V(t2) and V(t3), can represent the absolute signals values at transition points 31, 32, and 33. V(t1), V(t2) and V(t3) are assigned respective pole numbers PN, 1, 2, and 3 in the pole table with all the values V(a) between V(t1) and V(t2) being assigned PN=1 and all the values V(a) between V(t2) and V(t3) being assigned PN=2. Generally, for each V(ti) for ti=1-64, PN=i is assigned in the pole table for all the values V(a) between V(ti) and V(ti+1) in this example. (For V(t64) all the values V(a) between V(64) and V(1) are assigned PN=0.) The pole table is then used to provide the pole number PN of the measured pole M for which V(in) is generated corresponding to the absolute sensor measurement V(a) with respect to any angle of the position radius P.

Fig. 4 is a flowchart showing the application of the pole table to input value 41 provided by the absolute sensor 14 with respect to any angle of the position radius P to generate a corresponding pole number PN that can then be used to provide the number of poles NP between the reference radius R and the measured pole M. In the example, with 64 poles numbered 0-63 with pole0 being the first pole, the pole number PN corresponds directly to number of poles NP between the reference radius R and the measured pole M, so that the pole table can provide NP as PN for the calculation of the desired angle $A_{final}$.

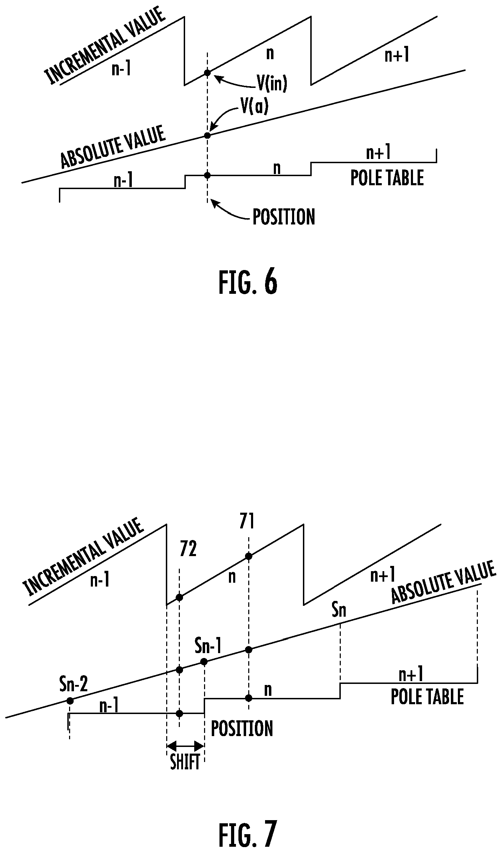

FIG. 5 is a graph illustrating the pole numbers as a step function in comparison with the absolute signal values V(a) that correspond to poles n-1, n and n+1. Fig. 6 is a graph illustrating three comparative curves for n-1 through n+1 poles, namely, the Fig. 5 curve of the pole table function with the corresponding absolute value V(a) and incremental value V(in) curves above with respect to poles n-1, n, and n+1.

Fig. 6, illustrates the direct correspondence of the absolute value V(a) with the pole number of the incremental value V(in) as reflected in the pole table when the table of poles is created during calibration. In use, however, the absolute sensor measurements V(a) are subject to distortion which can cause an erroneous value being provided from use of the pole table.

Fig. 7 is a graph illustrating the comparative curves for n-1 through n+1 poles, of the pole table function, and the corresponding absolute value V(a) and incremental value V(in) curves for poles n-1, n, and n+1 for a case where there has been a phase shift distortion such that there is no longer a direct correspondence of the absolute value V(a) with the pole number of the incremental value V(in) as reflected in the pole table. This distortion can cause erroneous results if a direct comparison of the absolute value V(a) to the pole table is made.

For example, with respect to pole n as the measured pole M, at point 71, a direct comparison of the absolute value V(a) to the pole table results in pole n being correctly identified. However, at point 72, a direct comparison of the absolute value V(a) to the pole table results in pole n-1 being incorrectly identified as the measured pole with respect to which the incremental value V(in) is generated.

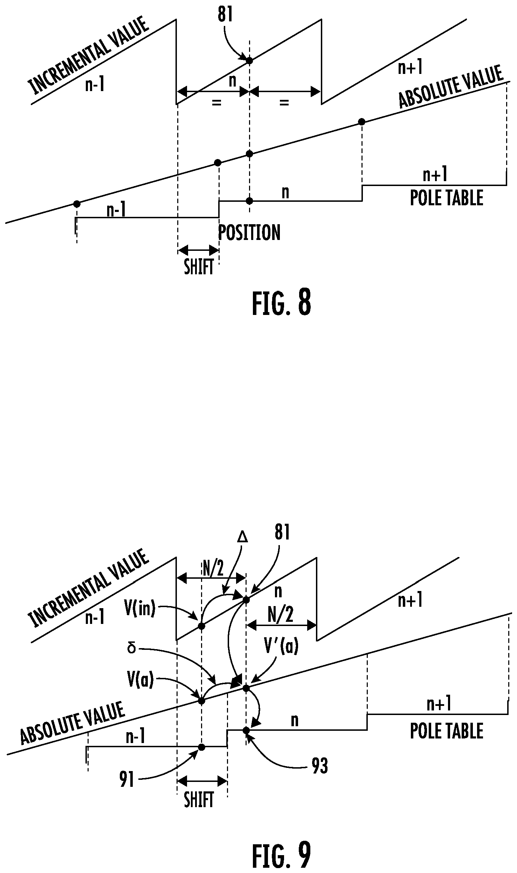

As noted above, in order to avoid error that can be caused by pole shifting during usage of the angular position sensor system 10, the processor 18 is configured to determine the number of poles NP based on a value from the pole table corresponding to an adjusted absolute angular measurement. Fig. 8 is an illustration similar to Fig. 7 where the phase shift has occurred, illustrating the designation of a midpoint 81 or center position with respect to pole n. Fig. 9 is an illustration similar to Figs. 7 and 8 where the phase shift has occurred, illustrating the how the midpoint 81 with respect to pole n is used in the formulation of the adjusted absolute angular measurement.

In Fig. 9, a value $\Delta$ represents the amount of offset from the actual or real position V(in) to the pole midpoint 81 on the incremental value curve for the pole n. A value $\delta$ represents the amount of offset from the actual or real position V(a) to the adjusted position V'(a) on the absolute value curve corresponding to the central position on the incremental value curve. Points 91 and 93 reflect the corresponding values from the pole table for position V(a) and the adjusted position V'(a), respectively.

The value $\delta$ of the variation in position from the actual position V(a) to the adjusted position V'(a) on the absolute value curve corresponds to the quantity $\Delta$ of the offset of the incremental value V(in) from the midpoint of the measured pole n on the incremental value curve since the absolute value and the incremental value are physically related. The relationship of the offset value $\delta$ to the quantity $\Delta$ is proportional to the pole width so the offset value $\delta$ on the absolute value curve V(a) and the offset value $\Delta$ on the incremental value curve V(in) is given as:

$$\delta = \Delta/np$$

where np = total number of poles, which in this example 64.

The value $\Delta$ can be calculated as follows:

$$\Delta = N/2 - V(IN)$$

where N = number incremental values per pole, in this 12-bit example N=4096.

Therefore, $\delta$ = (N/2-V(in))/np or, in this example, $\delta$ = (4096/2-V(in))/64,

The adjusted absolute value is: V'(a) = V(a)+6 which equals V(a)+(N/2-V(in))/np or, in this example, equals V(a)+ (4096/2-V(in))/64.

The final angle is then calculated from the pole number PN corresponding to V'(a) obtained from the pole table. In this example with the 64 poles numbered 0-63 and the first pole having PN=0, the pole number PN directly reflects number of poles NP between the reference radius R and the measured pole M. Accordingly, for this example:

$A_{fna}$ = (NP*PW)+ (V(in)/np )becomes $A_{final}$ = (PN*N/np)+V(in))/np = ((PN*4096)+V(in)) / 64 for this example.

The use of the adjusted absolute angular measurement for determining which of the poles is the measured pole M is an expedient way to address the problem of pole jump. In the embodiments described above, it is sufficient to shift the absolute value V(a) by a value $\delta$ so that it reflects the midpoint of the pole from which V(in) is produced. As long as the offset is less than half a pole, the calculation will give the correct pole number.

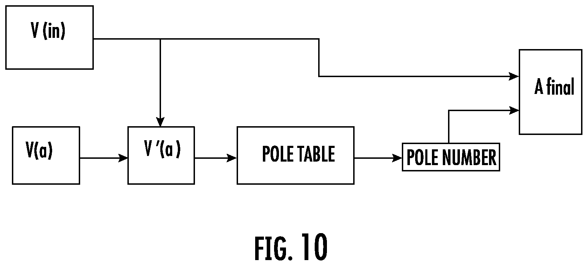

Fig. 10 is a flowchart illustrating an embodiment of a process for deriving the angle $A_{fina}$ by using an adjusted absolute value V'(a). An absolute value V(a) and an incremental value V(in) with respect to the position radius are provided as input data, and an adjusted absolute value V'(a) is derived based on the real absolute value V(a) and the real incremental value V(in). The adjusted absolute value V'(a) is then provided to the pole table, which generates a pole number PN indicative of the number of poles NP between the reference radius R and the measured pole M. As in the illustrative example above, where there are np poles designated with pole numbers PN 0 to (np-1), the pole number PN corresponds directly to the number of poles NP between the reference radius R and the measured pole M.

The angle $A_{fina}$ is then determined by the pole number and the real incremental value V(in). With the use of the adjusted absolute measurement approach an angular position sensor system that provides high resolution measurements over a 0-360° range.

The resolution of the final system is equal to the resolution of the incremental measuring system divided by the number of poles np. For example if we have np=64 and if V(in) has a resolution of 12 bits, the final resolution will be 12+6= 18 bits (since $64=2^6$). Likewise, the noise level of the final signal will be the noise level of the incremental system divided by np.

For the case where the pole widths are not the same, a corresponding value from the point to point correction table is used as discussed with respect to Fig. 3A. In such case, a value CV from the correction table is then be added to compensate for the non-linearities. The final angle A'$_{final}$ is then calculated as:

$$A'_{final} = A_{final} + CV \ = \ [(NP*N+V(in)) / np]+CV$$

where CV is the correction value that corresponds to the value of the final angle $A_{final}$ obtained during a calibration phase with a high precision reference sensor. If the pole widths are indeed constant (as in an inductive system for example), this linearization step is not necessary.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. An angular position sensor system configured to provide an angular measurement between a reference radius and a position radius that originate at a center of a circle comprising:

   an incremental sensor including:
   a series of adjacent poles disposed along a predetermined arc of the circle having a first pole with a first end intersecting the reference radius;
   with respect to a pole through which the position radius passes, the incremental sensor configured to provide an incremental measurement from a first end of the measured pole to the position radius;
   an absolute sensor configured to provide an absolute sensor measurement with respect to the position radius from which the number of poles between the reference radius and the measured pole is determined;
   a memory configured with a pole table including calibration data of a sequence of absolute sensor measurements reflective of adjacent pole transitions;
   a processor configured to determine the number of poles between the reference radius and the measured pole based on a correspondence of an adjusted absolute angular measurement with the pole table where the adjusted absolute angular measurement is determined from the absolute sensor measurement of the position radius offset by a quantity reflective of a distance of the position radius from a midpoint of the measured pole; and
   the processor configured to determine the angular measurement between the reference radius and the position radius based on a width of the determined the number of poles between the reference radius and the measured pole plus a width reflective of the incremental measurement.

2. The angular position sensor system of claim 1, wherein:

   the incremental sensor includes a series of np adjacent poles disposed around the entire circle, each pole having an arcuate width of approximately $360/np°$;
   the incremental sensor is configured to provide an incremental digital measurement $V(in)$ as the incremental measurement of the measured pole where $V(in)$ is in the range of N values (0 to N-1);
   the absolute sensor is configured to provide a digital absolute angular measurement $V(a)$ of the position radius as the absolute sensor measurement with respect to the reference radius;
   the pole table is reflective of a step function having the sequence of absolute sensor measurements defining each step;
   the processor is configured to determine the number of poles NP between the reference radius and the measured pole based on the correspondence of the adjusted absolute angular measurement defined as $V'(a)$ with the pole table where: $V'(a) = V(a) + \delta$ where $\delta = (N/2 - V(in))/np$; and
   the processor is configured to determine the angular measurement between the reference radius and the position radius of the circle as $A_{final}$ where: $A_{final} = (NP*N + V(in)) / np$.

3. The angular position sensor system of claim 2, wherein:

   the series of np adjacent poles are designated with sequential pole numbers (PNs) 0 to np-1 disposed around the entire circle, with the pole number PN of first pole designated as 0;
   the pole table defines a respective pole number PN for each step corresponding to the sequence of absolute sensor measurements defining each step;
   the processor is configured to determine, as the number of poles NP between the reference radius and the measured pole, the pole number PN of a pole indicated by the pole table as corresponding to the adjusted absolute angular measurement $V'(a)$; and
   the processor is configured to determine the angular measurement between the reference radius and the position radius of the circle as $A_{final}$ where: $A_{final} = (PN*N + V(in)) / np$.

4. The angular position sensor system of any of claims 2,3 or 5 wherein:

   the incremental sensor includes a series of 64 adjacent poles, each pole having an arcuate width of approximately $360/64°$;
   the incremental sensor is configured to provide a 12 bit incremental digital measurement $V(in)$ with N=4096; and
   the absolute sensor is configured to provide a 12 bit digital absolute angular measurement $V(a)$.

5. The angular position sensor system of claim 1, wherein:

the incremental sensor includes a series of i (i ≤np) adjacent poles of non-uniform width, the poles having an arcuate width of approximately 360/np°;

the incremental sensor is configured to provide an incremental digital measurement V(in) as the incremental measurement of the measured pole where V(in) is in the range of N values (0 to N-1);

the absolute sensor is configured to provide a digital absolute angular measurement V(a) of the position radius as the absolute sensor measurement with respect to the reference radius;

the memory is configured with a point to point correction table including correction values reflective of non-linearities attributable to non-uniform pole widths;

the pole table is reflective of a step function having the sequence of absolute sensor measurements defining each step;

the processor is configured to determine the number of poles NP between the reference radius and the measured pole based on the correspondence of the adjusted absolute angular measurement defined as V'(a) with the pole table where: $V'(a) = V(a)+ \delta$ where $\delta=(N/2-V(in))/np$; and

the processor is configured to determine the angular measurement between the reference radius and the position radius of the circle as $A'_{final}$ where: $A'_{final} =[(NP*N+V(in)) / np]+CV$ where CV is a correction value from the point to point correction table corresponding to $(NP*N+V(in)) / np$.

6. The angular position sensor system of any of claims 1-5 configured as an arc sensor wherein the incremental sensor includes a series of i (i <np) adjacent poles, each pole having an arcuate width of approximately 360/np°, whereby the angular position sensor system is configured to provide an angular measurement between the reference radius and the position radius of an arc less than 360°.

7. The angular position sensor system of any of claims 1-6 wherein the incremental sensor and the absolute sensor are configured to provide linear measurements.

8. A mechanical device having a first member rotatably connected with a second member about an axis, the device including the angular position sensor system of any of claims 1-7 mounted with respect to the first and second members such that the axis is orthogonal to the center of the circle and the reference radius is fixed with respect to the first member and the position radius is fixed with respect to the second member, whereby the angular position sensor system is configured to provide an angular measurement between the reference radius and the position radius reflective of a rotational displacement of the first member with respect to the second member.

9. A method of angular measurement between a reference radius and a position radius that originate at a center of a circle using an incremental sensor including a series of adjacent poles disposed along a predetermined arc of the circle having a first pole and a last pole with a first end of the first pole intersecting the reference radius, the method comprising:

generating an incremental measurement with respect to a pole of the incremental sensor through which the position radius passes from a first end of that measured pole to the position radius;

generating an absolute measurement of the position radius from which the number of poles between the reference radius and the measured pole is determined;

determining a number of poles NP between the reference radius and the measured pole based on a correspondence of an adjusted absolute angular measurement with a pole table where

the pole table includes calibration data of a sequence of absolute measurements reflective of adjacent pole transitions; and

the adjusted absolute angular measurement is determined from the absolute measurement of the position radius offset by a quantity reflective of a distance of the position radius from a midpoint of the measured pole; and

determining the angular measurement between the reference radius and the position radius based on a width of the determined the number of poles NP between the reference radius and the measured pole plus a width reflective of the incremental measurement.

10. The method of claim 9, where the incremental sensor includes a series of np adjacent poles disposed around the entire circle, each pole having an arcuate width of approximately 360/np°, wherein:

an incremental digital measurement V(in) is generated as the incremental measurement of the measured pole where V(in) is in the range of N values (0 to N-1);

a digital absolute angular measurement V(a) of the position radius is generated as the absolute measurement with respect to the reference radius;

the pole table is reflective of a step function having the sequence of absolute measurements defining each step;

the number of poles NP between the reference radius and the measured pole is determined based on the correspondence of the adjusted absolute angular measurement defined as V'(a) with the pole table where: $V'(a) = V(a) + \delta$ where $\delta = (N/2 - V(in))/np$; and

the angular measurement between the reference radius and the position radius of the circle is determined as $A_{final}$ where: $A_{final} = (NP*N + V(in)) / np$.

11. The method of claim 9, where the series of np adjacent poles are designated with sequential pole numbers (PNs) 0 to np-1 disposed around the entire circle, with the pole number PN of first pole designated as 0, and where the pole table defines a respective pole number PN for each step corresponding to the sequence of absolute measurements defining each step, wherein:

determining, as the number of poles NP between the reference radius and the measured pole, the pole number PN of a pole indicated by the pole table as corresponding to the adjusted absolute angular measurement V'(a); and

the angular measurement between the reference radius and the position radius of the circle is determined as $A_{final}$ where: $A_{final} = (PN*N + V(in)) / np$.

12. The method of claim 11, the incremental sensor includes a series of 64 adjacent poles, each pole having an arcuate width of approximately 360/64°, wherein:

a 12 bit incremental digital measurement is generated as V(in) with N=4096; and

a 12 bit digital absolute angular measurement is generated as V(a).

13. The method of claim 11, 12 or 14, the incremental sensor includes a series of i (i ≤np) adjacent poles of non-uniform width, the poles having an average arcuate width of approximately 360/np°, and where the pole table reflects a step function having the sequence of absolute measurements defining each step, wherein:

an incremental digital measurement V(in) is generated as the incremental measurement of the measured pole where V(in) is in the range of N values (0 to N-1);

a digital absolute angular measurement V(a) of the position radius is generated as the absolute measurement with respect to the reference radius;

the number of poles NP between the reference radius and the measured pole is determined based on the correspondence of the adjusted absolute angular measurement defined as V'(a) with the pole table where: $V'(a) = V(a) + \delta$ where $\delta = (N/2 - V(in))/np$; and

the angular measurement between the reference radius and the position radius of the circle is determined as $A'_{final}$ where: $A'_{final} = [(NP*N + V(in)) / np] + CV$ where CV is a correction value from a point to point correction table that includes correction values reflective of non-linearities attributable to non-uniform pole widths.

14. The method of claim 9 for use with an arc sensor where the incremental sensor includes a series of i (i <np) adjacent poles, each pole having an arcuate width of approximately 360/np°, whereby the angular measurement between the reference radius and the position radius is of an arc less than 360°.

15. A method of determining a rotational displacement with respect to a mechanical device having a first member rotatably connected with a second member about an axis, comprising:

performing the method of any of claims 9-15 such that:

the axis is orthogonal to the center of the circle;

the reference radius is fixed with respect to the first member; and the position radius is fixed with respect to the second member;

whereby the angular measurement between the reference radius and the position radius is reflective of the rotational displacement of the first member with respect to the second member.

FIG. 1

FIG. 3A

23

21

0   60   120   180   240   300   360

## FIG. 2A

23

120

21

0   60

## FIG. 2B

23

POLE#4

POLE#3

POLE#2

POLE#1

21    34         35              36

## FIG. 3B

41 → POLE TABLE → POLE NUMBER

## FIG. 4

POLE
NUMBER

n+1

n

n-1

ABSOLUTE SIGNAL VALUES

## FIG. 5

FIG. 6

FIG. 7

FIG. 8

FIG. 9

FIG. 10

Europäisches
Patentamt

European
Patent Office

Office européen
des brevets

# EUROPEAN SEARCH REPORT

Application Number

EP 24 16 6092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/198445 A1 (VISHAY MCB IND [FR]) 15 December 2016 (2016-12-15) * abstract * * page 16, line 29 - page 17, line 18; figure 1 * * page 20, line 8 - page 23, line 19; figure 3 * | 1-15 | INV. G01D5/244 G01D5/245 G01D18/00 |
| A,D | WO 2014/048872 A1 (MCB IND [FR]) 3 April 2014 (2014-04-03) * page 5, line 11 - line 31; figure 1 * * page 6, line 7 - line 9 * * page 7, line 12 - line 31 * * page 8, line 34 - page 9, line 2 * | 1-15 | |
| A | US 2010/050731 A1 (GRANIG WOLFGANG [AT] ET AL) 4 March 2010 (2010-03-04) * abstract * * paragraph [0023]; figure 1 * * paragraph [0036]; figure 7 * * paragraph [0041] * | 1,9 | |
| | | | TECHNICAL FIELDS SEARCHED (IPC) |
| | | | G01D G01B G01P |

The present search report has been drawn up for all claims

| Place of search | Date of completion of the search | Examiner |
|---|---|---|
| Munich | 10 September 2024 | Jakob, Clemens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 6092

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2024

| Patent document cited in search report | Publication date | Patent family member(s) | | Publication date |
|---|---|---|---|---|
| WO 2016198445 A1 | 15-12-2016 | CN | 107810390 A | 16-03-2018 |
| | | EP | 3104129 A1 | 14-12-2016 |
| | | EP | 3308107 A1 | 18-04-2018 |
| | | IL | 256205 A | 28-02-2018 |
| | | JP | 6847056 B2 | 24-03-2021 |
| | | JP | 2018517140 A | 28-06-2018 |
| | | KR | 20180016570 A | 14-02-2018 |
| | | WO | 2016198445 A1 | 15-12-2016 |
| WO 2014048872 A1 | 03-04-2014 | EP | 2711663 A1 | 26-03-2014 |
| | | WO | 2014048872 A1 | 03-04-2014 |
| US 2010050731 A1 | 04-03-2010 | DE | 102009038256 A1 | 15-04-2010 |
| | | US | 2010050731 A1 | 04-03-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014048872 A